# EUROPEAN PATENT APPLICATION

(11) **EP 0 529 866 A2**
(43) Date of publication of application: **03.03.1993**
(21) Application number: 92307338.1
(22) Date of filing: 11.08.1992
(51) Int. Cl.: G06F 15/72, G06F 15/16, G11C 7/00, G11C 8/00

(54) **Processor for a multiprocessor system**

(30) Priority: 22.08.1991 JP 233749/91
(71) Applicant: International Business Machines Corporation, Armonk, N.Y. 10504 (US)
(72) Inventor: Kawase, Kei, Komae-shi, Tokyo (JP); Matsumoto, Takashi, Tokyo (JP); Moriyama, Takao, Yokohama-shi, Kanagawa-ken (JP)
(74) Representative: Burt, Roger James, Dr.

(57) **Abstract**

A processor (22) for a multiprocessor system comprises a plurality of memories (30,31,32) each for storing a data set. A data path (24) communicates data to the memories (30,31,32). A controller (33) alternately enables and disables transfer of renewal data for updating the data set from the data path (24) to different ones of the memories (30,31,32). An executive unit (29) reads at least a portion of the data set stored in a disabled one of the memories (30,31,32). Renewal means (34) communicates at least a portion of the data set stored in an enabled one of the memories (30,31,32) to the disabled one of the memories (30,31,32) in response to that disabled one of the memories (30,31,32) being re-enabled by the controller (33).

## Description

The present invention relates to a processor for a multiprocessor system in which a data set is sequentially renewed by a data series, and snap shots (instantaneous values) of the data set at arbitrary points in time are assigned to element processors of the multiprocessor system, so that instructions for the snap shots such as drawing instructive primitives are efficiently executed in parallel.

Conventional three dimensional graphic interfaces such as PHIGS (Programmer's Hierarchical Interactive Graphics System) hold data in the form of a structure, estimate the data structure upon drawing, and generate a series of drawing instructions. The series of drawing instructions includes attribute setting instructions and drawing instructions (primitives). The attribute setting instructions enter their attribute values in corresponding items in Traversal State List (TSL). The primitives perform drawing by using attribute values held in the TSL when the primitives are issued. When parallel execution of this by a multiprocessor system is desired, it is efficient to assign processors to respective primitives and have them execute the primitives. In this case, each processor to which the primitives are assigned must remember the contents of the TSL upon assignment of the primitive. To this end, each processor must copy the TSL into its own region before processing the primitives. The size of the TSL is normally more than 1000 bytes. Therefore, overhead increases because of an increase in traffic on the bus and so on, and the advantage of the high speed nature of parallel execution is decreased.

Japanese Patent Application 3-21470 discloses a technique for logging changes in a memory of an active processor of a fault tolerant computer occurring on and after a check point and for modifying memory of a backup processor upon the start-up thereof. This application, however, does not teach the use of multiple memories in a single processor to hold both a data set during execution and a current data set.

In accordance with the present invention, there is now provided a processor for a multiprocessor system, the processor comprising: a plurality of memories each for storing a data set; a data path for communicating data to the memories; a controller for alternately enabling and disabling transfer of renewal data for updating the data set from the data path to different ones of the memories; an executive unit for reading at least a portion of the data set stored in a disabled one of the memories; and renewal means for communicating at least a portion of the data set stored in an enabled one of the memories to the disabled one of the memories in response to that disabled one of the memories being re-enabled by the controller.

This advantageously permits a series of instructions corresponding to a data set, which is sequentially renewed by a data series, such as those in PHIGS process, to be sequentially executed by a multiprocessor system with a smaller overhead than that associated with conventional systems.

Viewing a second aspect of the present invention, there is now provided a multiprocessor system for instantaneous values of a data set at an arbitrary point of time are assigned to a plurality of element processors at a high speed, the data set being sequentially renewed by a series of data having a sequentiality, and for executing instruc-tions for the instantaneous values in parallel in the element processors, comprising: a data path for transferring renewal data for the data set; a plurality of memories provided in each of the element processors for storing the data set independently, and coupled to the data path for renewing the contents of the data set on the basis of the renewal data; means provided in each of the element processors for alternatively locking the memories; executive means provided in each of the element processors for reading at least a part of the data set from the locked memory and for executing an instruction assigned to the element processor; and means provided in each of the element processors for transferring at least a part of the data set to the memory having been locked beforehand from another unlocked memory after the reading of the data set.

The present invention thus advantageously provides a procedure for dealing with a data set which is sequentially renewed by a data series, in which snap shots of the data set at arbitrary points in time are assigned to element proces-sors of a multiprocessor system to execute instructions corresponding to the snap shots in an efficient and parallel fashion.

Viewing a third aspect of the present invention, there is now provided a memory managing system comprising: a first memory having a dual port structure; two second memories having a dual port structure; a data path for broadcasting data to first ports of the first and second memories; means for alternatively locking the second memories; selecting means for alternatively coupling locked one of second ports of the second memories to executive means; and means for transferring data from a second port of the first memory to the second port of the second memory then unlocked under direct memory access control.

Viewing a fourth aspect of the present invention, there is now provided a graphics display system for coupling a graphics unit to a bus of a host computer and for effecting graphics display on a display unit of the host computer, comprising: a plurality of element processors; a plurality of local memories provided in each of the element processors; control means for extracting data renewal instructions and drawing instructions from a memory of the host computer, for renewing data of the local memories of each of the element processors on the basis of the data renewal instructions, and for assigning the drawing instructions to the element processors; means provided in each of the element processors for locking at least one of the local memories of the element processor when the drawing instructions are assigned to the element processor; means provided in each of the element processors for supplying executive means of the element processor with data of the local memory currently locked in the element processor; and means provided in each of the element processors for transferring data from the local memory unlocked heretofore to the local memory locked heretofore in the element processor.

In a preferred embodiment of the present invention there is provided a multiprocessor system having plural element processors each having three memories. Each memory can be selectively locked so that snap shots of a data set at arbitrary points of time can be obtained at a high speed. That is, one of the three memories (called a master copy) is used to always maintain up-dated contents, and one of the other two memories (called slave copies) is locked at an arbitrary point of time to obtain snap shots. The currently unlocked slave copy is controlled to have the same contents as those of the master copy. When another need for snap shots occurs, the slave copy unlocked heretofore is then locked and used, while the slave copy locked heretofore is then unlocked and controlled to have the same contents as those of the master copy. In this manner, snap shots at arbitrary points of time can be obtained at a high speed. Therefore, overhead for executing parallel process is small, and the advantage of parallel process is maintained maximal.

It will be appreciated that the present invention also extends to use of double memories with only one slave copy being made. In this case, the efficiency is slightly decreased because instructions cannot be assigned during the process for coinciding the slave copy with the master copy. The memories may also be quadruple or more.

A preferred embodiment of the invention will now be described with reference to the accompanying drawings in which:
Figure 1 is a block diagram of an embodiment of the invention;
Figure 2 is a block diagram of part of the embodiment in greater detail;
Figure 3 is a diagram of a phase of operation of the embodiment;
Figure 4 is a diagram of a phase of operation of the embodiment;
Figure 5 is a diagram of a phase of operation of the embodiment;
Figure 6 is a diagram of a phase of operation of the embodiment;
Figure 7 is a diagram of a phase of operation of the embodiment;
Figure 8 is a diagram of a phase of operation of the embodiment;
Figure 9 is a diagram of a phase of operation of the embodiment;
Figure 10 is a diagram of a phase of operation of the embodiment; and
Figure 11 is a diagram of the operation by a part of figure 2.

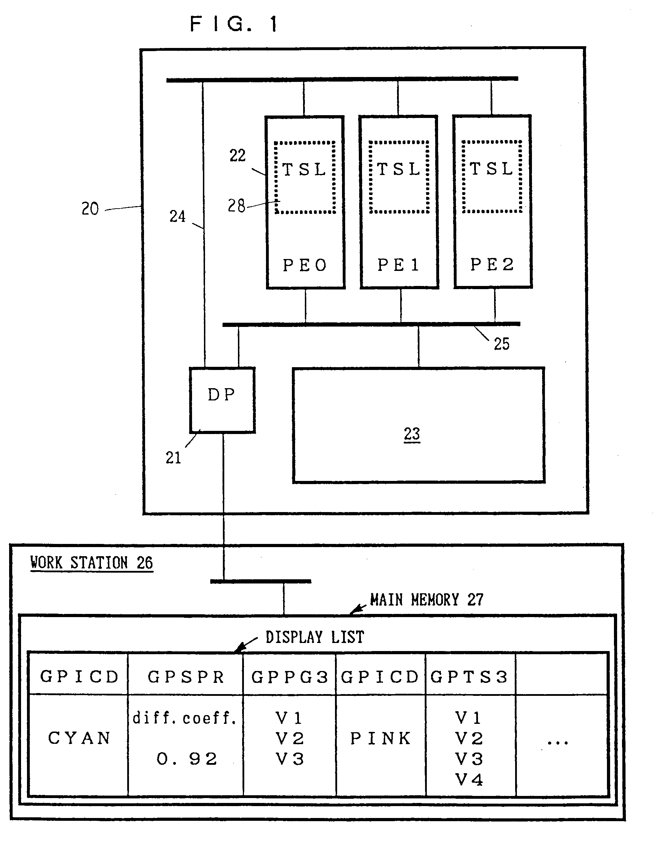

Figure 1 shows a graphics multiprocessor system (Geometry Engine) 20 of the present invention. This is packaged on a single card. The graphics system 20 includes a dispatch processor 21, a plurality of element processors 22, a shared work memory 23, an attribute bus 24, and a data bus 25. The attribute bus 24 connects the dispatch processor 21 and element processors 22, and broadcasts attribute instructions or the like from the dispatch processor 21 to the element processors 22, respectively. The data bus 25 interconnects the dispatch processor 21, the element processors 22, and the shared work memory 23 and communicates primi-tives of PHIGS.

The graphics system 20 is compatible with a Microchannel (trade mark) bus of a host work station 26 such as a Power Station 6000 (trade mark) work station fabricated by International Business Machines Corporation in U.S.A. The graphics system 20 performs graphics process on the basis of a display list (a series of instructions consisting of attribute setting instruc-tions and primitives) of PHIGS on a main memory 27 of the work station 26. Results of the graphics process are displayed on a display unit (not shown) of the work station 26.

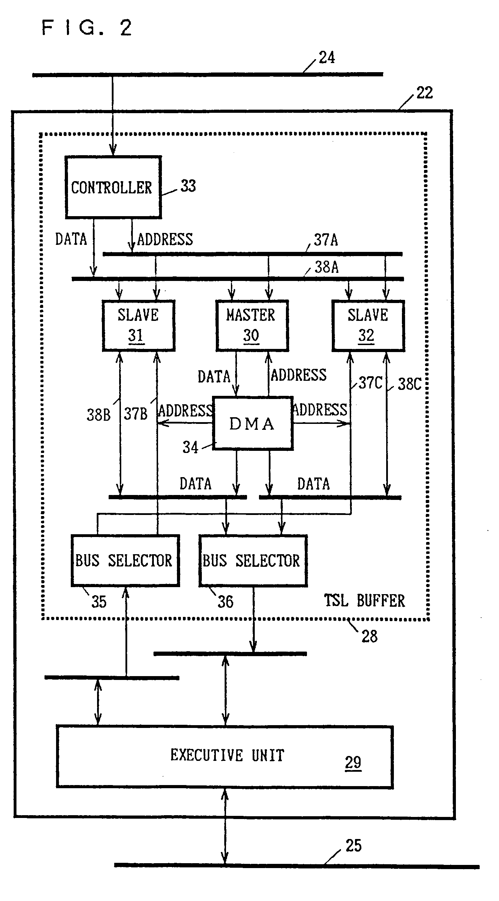

The dispatch processor 21 reads the display list on the main memory 26 of the work station 26, and sequentially extracts attribute setting instructions and primitives. When the instructions are attribute setting instructions, the dispatch processor 21 permits addresses and attribute values corresponding to the attribute items to flow to the attribute bus 24. It also writes the primitives on the element processors 22 (PE0, PE1, and PE2) through the data bus 25. In response to the writing of the primitives on the work memory 23, the dispatch processor 21 supplies lock instructions through the attribute bus 24 to a TSL buffer 28 (described later with reference to figure 2) of one of the element processors 22 to which the primitives are to be assigned, and subse-quently supplies executive instructions (GO) through the data bus 25 to an executive unit 29 of the element processor 22.

Referring to Figure 2, each element processor 22 includes an executive unit (interior CPU core) 29 and a TSL buffer 28. The executive unit 29 processes primitives.

The TSL buffer 28 includes a dual port master memory 30, dual port slave memories 31 and 32, controller 33, DAM (Direct Memory Access Controller) 34, bus selectors 35 and 36, and so on. The controller 33 is connected to the attribute bus 24 and to one of ports of each of the master memory 30 and the slave memories 31 and 32 through a first buffer address bus 37A and a first buffer data bus 38A. The other port of the slave memory 31 is connected to a second buffer address bus 37B and a second buffer data bus 38B. Similarly, the other port of the slave memory 32 is connected to a third buffer address bus 37B and a second buffer data bus 38B. The other port of the master memory 30 is connected via DMA 34 to the second and third buffer address buses 37B, 37C, and the second and third buffer data buses 38B, 38C. The bus selectors 35 and 36 select one of the pair consisting of the second buffer data bus 38B and the second buffer address bus 37B and the pair consisting of the third buffer data bus 38C and the third buffer data bus 37C, and connect it to an interior data bus 39 and an interior address bus 40 of the element processor 22.

The controller 33 alternately locks the slave memories 31 and 32 in response to lock instructions sent from the despatch processor 21.

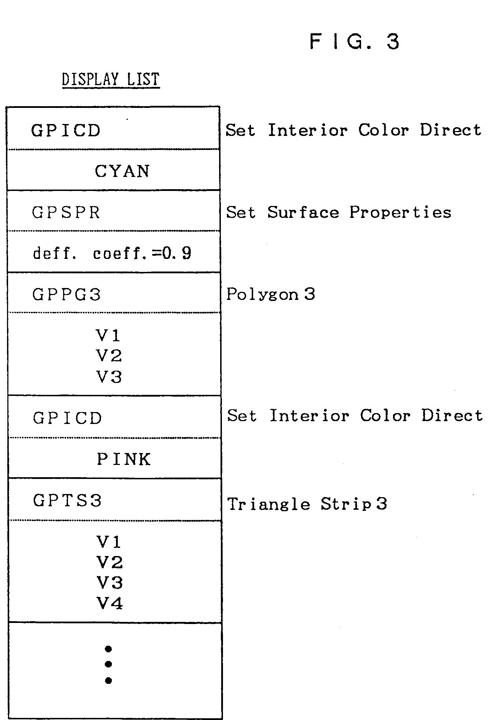

Figure 3 shows a series of instructions for entry to the system. When entered, the series of instructions is first delivered to the dispatch processor 21. If the delivered instructions are attribute setting instructions, the dispatch processor 21 permits them to flow to the attribute bus 24.

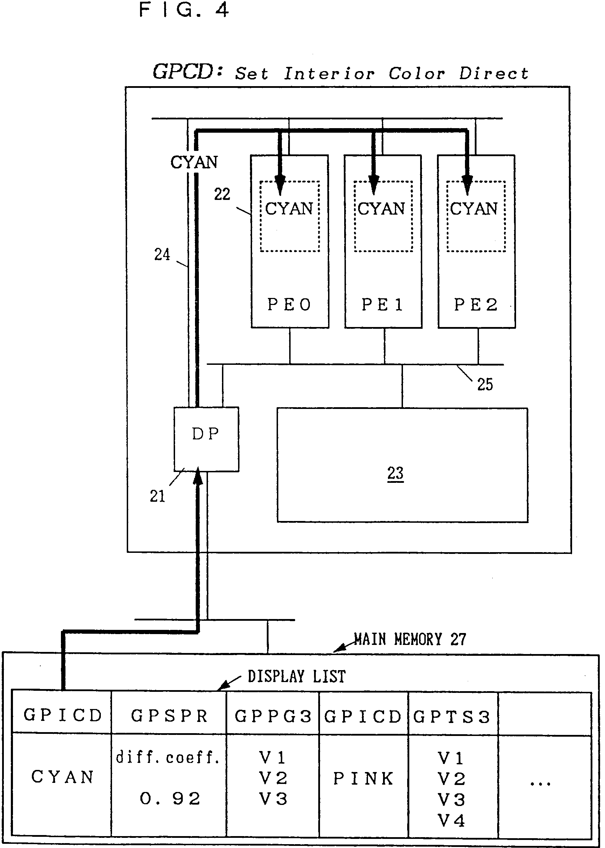

Figure 4 shows the state where the first attribute setting instructions (Set Interior Color Direct CYAN) have been delivered. Each element processor 22 (PE0, PE1, and PE2) copies the attribute values into its own TSL buffer 28.

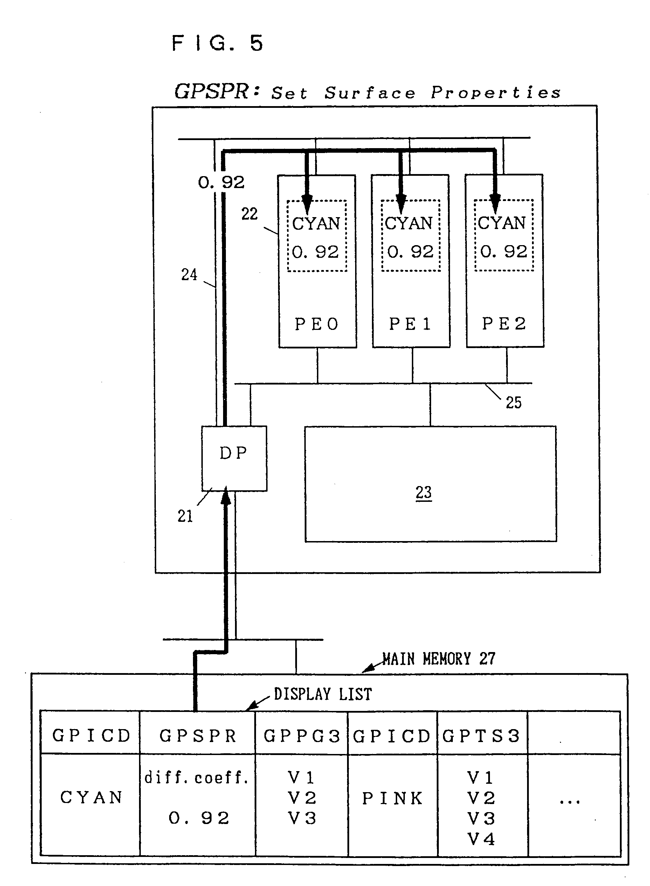

Figure 5 shows the state where the next attribute setting instructions (Set Surface Properties diff. coeff.=0.9) have been delivered. Each element processor 22 (PE0, PE1, and PE2) copies attributes into its own TSL buffer 28 in the same manner.

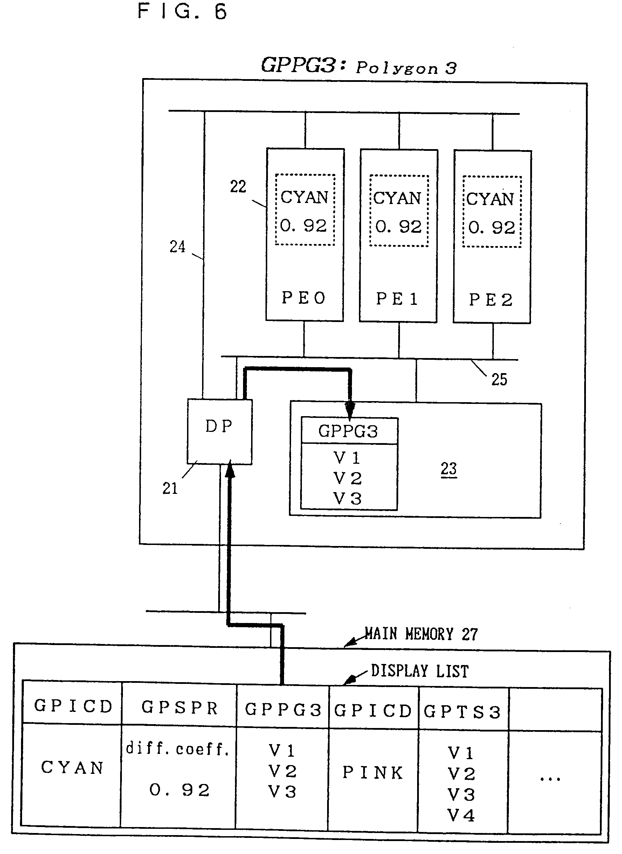

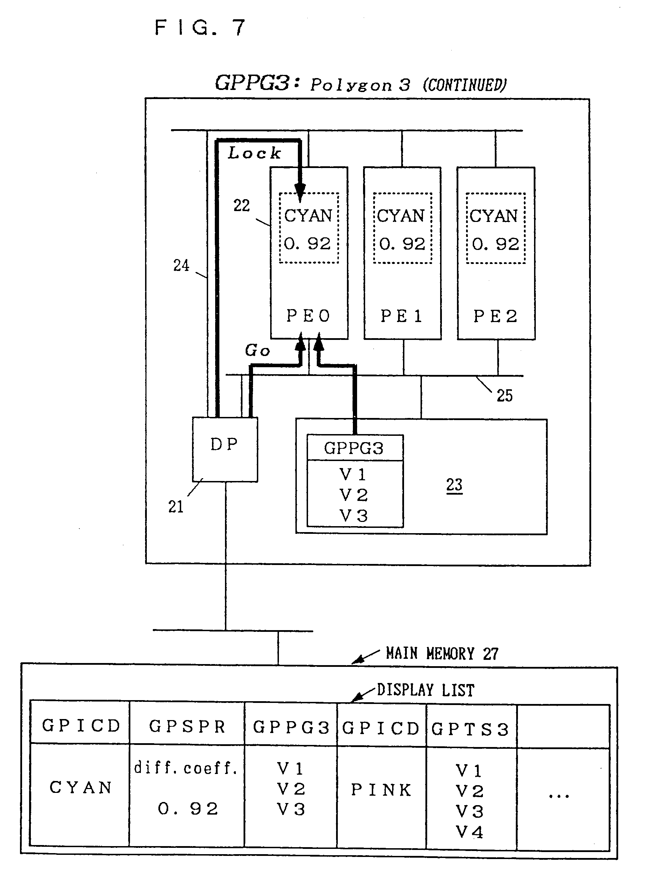

Figure 6 shows the state where the next primitives (Polygon 3) have been delivered. The dispatch processor 21 first copies them into the work memory 23. With reference to Figure 7, thereafter, it locks the element processor 22 (PE0) via the attribute bus 24, and issues primitive executive instructions (GO). The element processor 22 (PE0), when locked via the attribute bus 24, does not renew the TSL buffer 28 it currently refers to (actually, one of the slave memories 31 and 32 of the TSL buffer 28 currently referred to by itself.)

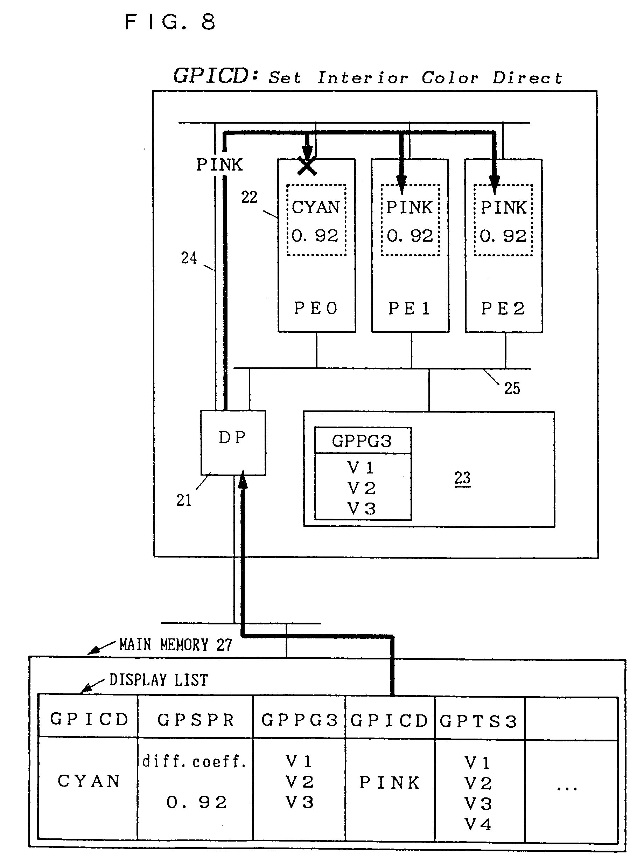

Figure 8 shows the state where the next attribute setting instructions (Set Interior Color Direct PINK) have been delivered. Since the element processor 22 (PE0) is currently locked, it does not take in this attribute. However, the other processors 22 (PE1 and PE2) copy the attribute into their own TSL buffers 28 in the same manner as described above.

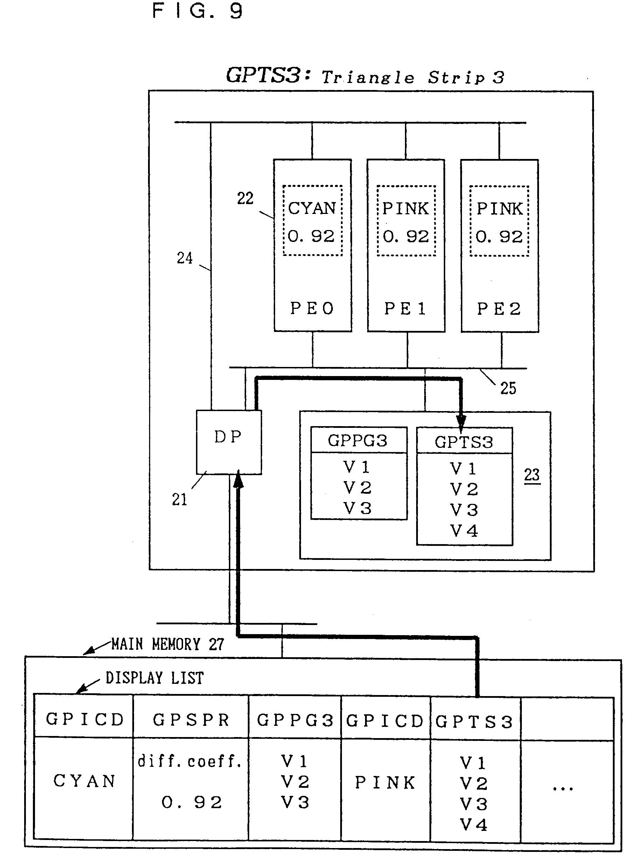

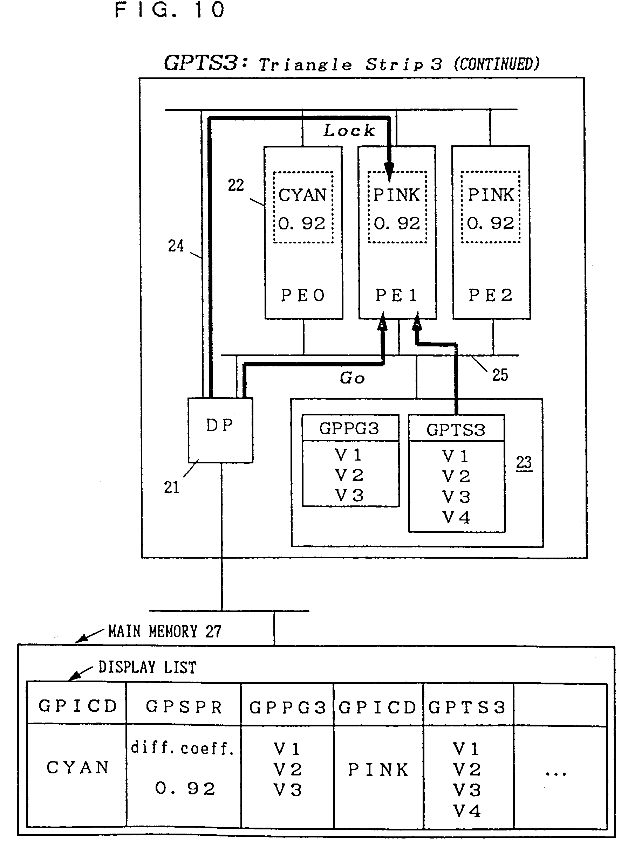

Figure 9 shows the state where the next primitives (Triangle Strip 3) have been delivered. The dispatch processor 21 first copies them into the work memory 23. Thereafter, referring to figure 10, the dispatch processor 21 locks the element processor 22 (PE1) via the attribute bus 24, and issues primitive executive instructions (GO). The element processor 22 (PE1), when locked via the attribute bus 24, does not renew the TSL buffer 28 it currently refers to (actually, one of the slave memories 31 and 32 of the TSL buffer 28 currently referred to by itself.)

By performing this process, each element processor 22 can immediately obtain snap shots of the attributes, and can process the primitives in parallel. However, each element processor 22 must restore the contents of the TSL buffer not renewed during the lock (actually, one of the slave memories 31 and 32 of the TSL buffer 28 currently referred to by itself) so as to coincide with the current contents of TSL.

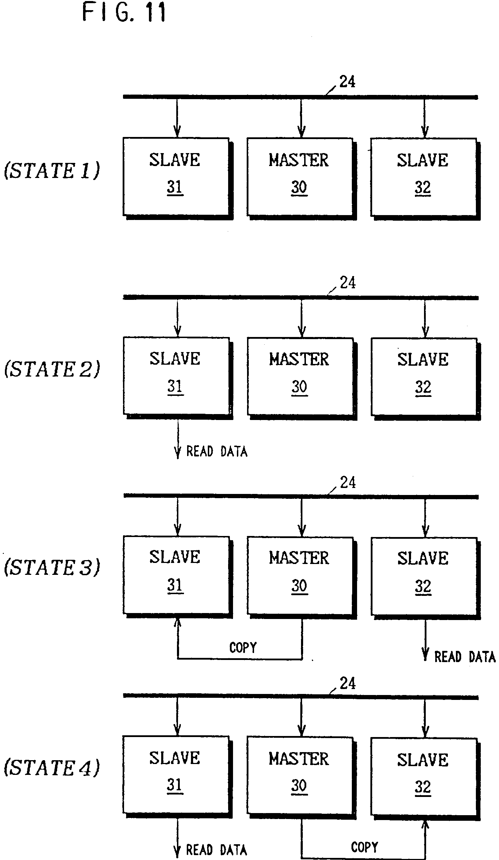

In order to attain the aforementioned purpose, triple memories that can partly be locked are used as the TSL buffer 28. Figure 11 schematically shows the construction of the TSL buffer 28 connected to the attribute bus 24. In the initial status, each of the memories 30, 31 and 32 copies all the attribute values flowing in the attribute bus 24 (Status 1 of figure 11). When a lock command is issued from the attribute bus 24 to the element processor 22, the slave memory 31 is first detached from the attribute bus 24 so that renewal of attribute values in the slave memory 31 is not effected thereafter (renewal of the master memory 30 and the slave memory 32 is continued.) Detachment of the slave memory 30 from the attribute bus 24 is completed before access by the executive unit 29 (see figure 2) is accepted. If the executive unit 29 tries to access before detachment is completed, it is kept waiting until detachment is completed (Status 2 of figure 11).

When a lock command to the element processor 22 is subsequently issued from the attribute bus 24, the slave memory 32 is detached from the attribute bus 24 (if the executive unit 29 attempts to access before completion of the detachment, it is kept waiting until completion of the detachment in the same way as described above.) Since it appears to the executive unit 29 that both slave memories 31 and 32 have the same address (because of the selectors 35 and 36, the executive unit 29 can never see both at the same time), it is not necessary for the executive unit to know whichever is currently accessed. Concurrently with detachment of the slave memory 32 from the attribute bus 24 (Concurrence is not essential provided it is after the detachment. However, the sooner, the better), the slave memory 31 is re-connected to the attribute bus 24. However, since the contents of slave memory 31 has not been refreshed by renewal of attribute values for the duration of the detachment from the attribute bus 24, all of the contents of the master memory 30 is copied into slave memory 31 DMA 34 (also during this time, if a further renewal occurs in attribute values, preference is given to the latest renewal (State 3 of figure 5).

When a lock command is next issued to the element processor 22 from the attribute bus 24, the slave memory 31 is detached from the attribute bus 24 in the same manner as the foregoing procedure, and it is configured to permit the executive unit 29 to read its contents (State 4 of figure 5). Thus, each element processor 22 alternately uses the slave memories 31 and 32 in the same manner every time a lock command is issued. The master memory 30 is always maintained in the updated state, and the slave memories 31 and 32 can be restored to the updated state via DMA 34. Since the DMA 34 operates independently of and in parallel with execution by the executive unit 29, the executive unit 29 need not normally recognize the execution. However, in case the task provided by the dispatch processor 21 is sufficiently short for it to be finished before completion of DAM operation, the executive unit 29 confirms at the end of the task whether the DMA operation has been completed or not. If the DMA operation is not completed yet, the executive unit 29 delays notice of completion of the task to the dispatch processor 21 until the DMA operation is completed. The dispatch processor 21 dispatchs the next task to the same element processor 22 only upon receipt of the notice on completion of the task. Another embodiment of the present invention may also comprise means for reporting completion of the DMA operation to the dispatch processor 21 upon completion of the DMA operation. In this embodiment, the dispatch processor 21 dispatches the next task after receiving both the report of completion of the task and the report of completion of the DMA operation.

The DMA operation is actually performed in the interior of a CPU chip via a specific high-speed bus having a wide bandwidth. Therefore, the time is short (128 CPU cycles if one transfer is possible in 1 CPU cycle, with a memory size of 2K bytes, and a bus width: 128 bits). Overhead of the copy by the DMA operation is completely hidden so far as a process requiring 128 CPU cycles is being performed.

In this way, each element processor 22 of the multiprocessor system can quickly use snap shots of attributes at arbitrary points of time, and the system can efficiently assign drawing commands to the element processors 22 to execute them in parallel at a high speed.

In the preferred embodiment of the present invention hereinbefore described the multiprocessor system has three element processors. However, it will be appreciated that the number of element processors in other embodiments of the present invention may be greater than or less than three.

This invention is not limited to the embodiment referred to above. It involves various modifications without departing the scope thereof. For example, the slave memory may be only one, and the use of the invention is not limited to PHIGS process.

In summary, the embodiments of the present invention hereinbefore described include a plurality of memories, such as triple memories, which are provided in the interior of each element processor and can be locked selectively, so that snap shots of a data set at arbitrary points of time can be obtained at a high speed. Therefore, a plurality of instructions responsive to the snap shots at a plurality of arbitrary points of time can be executed in parallel by a plurality of processors.

## Claims

1. A processor (22) for a multiprocessor system, the processor (22) comprising:
a plurality of memories (30,31,32) each for storing a data set;
a data path (24) for communicating data to the memories (30,31,32);
a controller (33) for alternately enabling and disabling transfer of renewal data for updating the data set from the data path (24) to different ones of the memories (30,31,32);
an executive unit (29) for reading at least a portion of the data set stored in a disabled one of the memories (30,31,32); and
renewal means (34) for communicating at least a portion of the data set stored in an enabled one of the memories (30,31,32) to the disabled one of the memories (30,31,32) in response to that disabled one of the memories (30,31,32) being re-enabled by the controller (33).

2. A processor (22) as claimed in claim 1, comprising a first memory (30) for receiving renewal data from the data path (24) independently of the controller (33) and one or more second memories (31,32) controlled by the controller (33), wherein the renewal means (34) communicates data from the first memory (30) to the one or more second memories (31,32) in response to the controller (33) enabling the one or more second memories (31,32).

3. A processor (22) as claimed in claim 2 wherein the first and second memories (30,31,32) each have first and second ports wherein first ports of the first and second memories (30,31,32) receive the renewal data and a second port of a second memory (31,32) sends at least a part of the data set to the executive unit (29).

4. A processor (22) as claimed in claim 2 or claim 3, wherein the renewal means (34) communicates the at least a portion of the data from a second port of the first memory (30) to a second port of a second memory (31,32).

5. A processor (22) as claimed in any preceding claim wherein the renewal means (34) comprises a direct memory access controller.

6. A processor (22) as claimed in any of claims 2 to 5, comprising two second memories (31,32).

7. A multiprocessor system comprising a plurality of processors (22) as claimed in any preceding claim connected in parallel by a common data path.

8. A memory managing system comprising:
a first memory having a dual port structure;
two second memories having a dual port structure;
a data path for broadcasting data to first ports of the first and second memories;
means for alternatively locking the second memories;
selecting means for alternatively coupling locked one of second ports of the second memories to executive means; and
means for transferring data from a second port of the first memory to the second port of the second memory then unlocked under direct memory access control.

9. A graphics display system for coupling a graphics unit to a bus of a host computer and for effecting graphics display on a display unit of the host computer, comprising:
a plurality of element processors;
a plurality of local memories provided in each of the element processors;
control means for extracting data renewal instruc-tions and drawing instructions from a memory of the host computer, for renewing data of the local memories of each of the element processors on the basis of the data renewal instructions, and for assigning the drawing instructions to the element processors;
means provided in each of the element processors for locking at least one of the local memories of the element processor when the drawing instructions are assigned to the element processor;
means provided in each of the element processors for supplying executive means of the element processor with data of the local memory currently locked in the element processor; and
means provided in each of the element processors for transferring data from the local memory unlocked heretofore to the local memory locked heretofore in the element processor.
